(19) Europäisches Patentamt
European Patent Office
Office européen des brevets

(11) **EP 4 613 415 A1**

(12) **EUROPEAN PATENT APPLICATION**
published in accordance with Art. 153(4) EPC

(43) Date of publication:
**10.09.2025 Bulletin 2025/37**

(21) Application number: **24747226.9**

(22) Date of filing: **19.01.2024**

(51) International Patent Classification (IPC):
***B23K 11/24*** *(2006.01)*        ***B23K 11/11*** *(2006.01)*

(52) Cooperative Patent Classification (CPC):
**B23K 11/11; B23K 11/24**

(86) International application number:
**PCT/JP2024/001491**

(87) International publication number:
**WO 2024/157898 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.01.2023 JP 2023007962**

(71) Applicant: **JFE Steel Corporation
Tokyo 100-0011 (JP)**

(72) Inventors:
• **MUNEMURA Naoaki
  Tokyo 100-0011 (JP)**
• **TANIGUCHI Koichi
  Tokyo 100-0011 (JP)**
• **SAWANISHI Chikaumi
  Tokyo 100-0011 (JP)**

(74) Representative: **Haseltine Lake Kempner LLP
Bürkleinstrasse 10
80538 München (DE)**

(54) **RESISTANCE SPOT WELDING METHOD AND WELDED JOINT MANUFACTURING METHOD**

(57)    To provide resistance spot welding in which a required nugget diameter can be stably obtained even when a disturbance exists.

A resistance spot welding method includes performing actual welding and test welding prior to the actual welding. In the test welding, a time variation curve of an instantaneous amount of heat generation per unit volume and a cumulative amount of heat generation per unit volume calculated from an electrical property between electrodes when a target nugget diameter is formed by performing passing of current under constant current control is stored. In the actual welding, the time variation curve of the instantaneous amount of heat generation per unit volume and the cumulative amount of heat generation per unit volume stored in the passing of current in the test welding is set as target values of passing of current in the actual welding, and adaptive control welding in which a current-passing amount is controlled in accordance with the target values is performed. In the actual welding, a constant lower limit set value for a current is provided.

EP 4 613 415 A1

**Description**

Technical Field

The present invention relates to a resistance spot welding method and a method for manufacturing a weld joint.

Background Art

In general, a resistance spot welding method, which is a type of lap resistance welding method, is used for joining overlapped steel sheets. This welding method is a method in which two or more overlapped steel sheets are joined by passing a high welding current between upper and lower electrodes for a short period of time while squeezing and pressing the steel sheets from above and below with a pair of electrodes. Contact portions of the steel sheets are melted by resistive heat generated by passing the high welding current, and a spherical welded portion is obtained. This spherical welded portion is called a nugget, and is a portion where both the steel sheets are melted and solidified at the contact portions of the steel sheets when passing a current through the overlapped steel sheets. The nugget causes the steel sheets to be jointed to each other in a spot-like manner.

To obtain favorable welding quality, it is important for a nugget diameter to be formed within an appropriate range. The nugget diameter is determined by welding conditions such as a welding current, a current-passing time, an electrode shape, and a pressing force. Thus, to form an appropriate nugget diameter, it is necessary to appropriately set the above-described welding conditions in accordance with conditions of parts to be welded, such as material properties, sheet thicknesses, and the number of overlapped sheets of the parts to be welded.

For example, in manufacturing automobiles, spot welding is performed at several thousand points per automobile, and it is necessary to weld workpieces flowing one after another. At this time, the same nugget diameter can be obtained under the same welding conditions such as the welding current, the current-passing time, and the pressing force, when states of the parts to be welded, such as the material properties, the sheet thicknesses, and the number of overlapped sheets of the parts to be welded, are the same at each welding point.

However, when a disturbance occurs during welding, for example, when a point that has already been welded (a welded point) is positioned near a point to be welded, or when surface irregularities of the parts to be welded are large and a contact point between the parts to be welded is positioned near a point to be welded, current partially flows to the welded point or the contact point during welding. In such a state, even when welding is performed under predetermined conditions, a nugget with a required diameter cannot be obtained because a current density at a position to be welded immediately below the electrode is reduced. To compensate for the shortage of an amount of heat generation to obtain the nugget having the required diameter, it is necessary to set a high welding current in advance.

In addition, when the periphery of a point to be welded is strongly constrained due to surface irregularities, shapes of the members, or the like, or when a foreign substance is interposed between the steel sheets around a point to be welded, a sheet gap between the steel sheets is increased, and thus a contact diameter between the steel sheets is reduced, and a spatter may be easily generated.

To solve such welding instability, so-called adaptive control welding has been proposed. In the adaptive control welding, the change in a welding phenomenon due to the wear of the electrodes or the disturbance described above is directly measured or calculated as an electrical signal related to the change in a current, a voltage, a resistance or an amount of heat generation during welding, and then an input parameter such as a welding current or voltage is controlled on the basis of the measured or calculated value.

Patent Document 1 describes a welding condition control method for a resistance welder configured to detect a welding current and a tip-to-tip voltage, to perform simulation at a portion to be welded by heat transfer calculation, and to estimate a formation state of a nugget of the portion to be welded during welding, thereby performing favorable welding.

In Patent Document 2, a welding system is used in which a cumulative amount of heat generation per unit volume for allowing parts to be welded to be favorably welded is calculated from sheet thicknesses of the parts to be welded and a current-passing time, and adjustment to a welding current or a voltage that generates the calculated amount of heat generation per unit volume and per unit time is performed. As a result, the disclosed resistance welding system can perform favorable welding regardless of a type of the parts to be welded and a wear state of electrodes.

In Patent Document 3, a welding pattern is divided into two steps, that is, securing a conduction path immediately below an electrode and subsequently, forming a nugget having a predetermined diameter. A time variation of an instantaneous amount of heat generation per unit volume and a cumulative amount of heat generation per unit volume calculated from an electrical property between electrodes in a case of forming a proper nugget by performing passing of current by constant current control in test welding are stored as target values, and a current-passing amount is adaptively controlled such that a cumulative amount of heat generation in actual welding matches the cumulative amount of heat generation obtained in advance in the test welding. A resistance spot welding method in which a nugget diameter equal to or larger than a certain level can be obtained in this way is described.

In Patent Document 4, when a cumulative amount of heat generation is stored in test welding, a state with a disturbance is simulated and stored, and then a current-passing amount is adaptively controlled such that a cumulative amount of heat generation in actual welding matches the cumulative amount of heat generation obtained in advance in the test welding. A resistance spot welding method in which a nugget diameter equal to or larger than a certain level can be obtained in this way is described.

In Patent Document 5, before the start of passing of current in actual welding, pressing is performed until an initially set pressing force is reached, the pressing force is also measured in the actual welding in the same way, and the pressing force during passing of current is set by using a parameter of a pressing force index obtained before reaching the initially set pressing force from the start of the pressing. A resistance spot welding method in which a nugget diameter can be obtained in this way is described.

Citation List

Patent Literature

Patent Document 1: JP H10-94883 A
Patent Document 2: JP H11-33743 A
Patent Document 3: WO 2015/049998
Patent Document 4: JP 2019-034341 A
Patent Document 5: WO 2020/095847

Summary of Invention

Technical Problem

However, in the resistance spot welding technique described in Patent Document 1, since a temperature of the nugget is estimated on the basis of a heat transfer model (heat transfer simulation) or the like, complicated calculation processing is required, and there are problems that not only the configuration of a welding control device becomes complicated but also the welding control device itself becomes expensive.

In the resistance spot welding technique described in Patent Document 2, it is considered that controlling a cumulative amount of heat generation to a target value allows for favorable welding even when electrodes are worn by a certain amount. However, when the set conditions for parts to be welded are significantly different from the actual conditions for parts to be welded, for example, when a large gap exists between metal sheets serving as parts to be welded or the like, even in a case in which the final cumulative amount of heat generation can be adjusted to the target value, the mode of heat generation, that is, the time variation in a temperature distribution at a portion to be welded, deviates from a target heat amount pattern for obtaining a favorable welded portion, and a required nugget diameter cannot be obtained or a spatter may be generated.

In addition, in the resistance spot welding techniques described in Patent Document 3 to Patent Document 5, although the cumulative amount of heat generation is stored, it may be difficult to stably form a nugget against a strong disturbance.

Solution to Problem

Thus, the present invention has been made in view of the above circumstances, and an object thereof is to provide a resistance spot welding method and a method for manufacturing a weld joint in which a required nugget diameter can be stably obtained even when a disturbance is present. The inventors of the present invention have conducted intensive experimental studies on these.

As a result of the studies, it was found that setting an appropriate lower limit value for a current in resistance spot welding is effective for suppressing an excessive decrease in current and suppressing a decrease in nugget diameter even when a disturbance is present. It is considered that the decrease in current is caused as follows: when a contact between the sheets is reduced, a contact area S in Equation (2), which will be described below, decreases, a resistance R increases, and thus an amount of heat generation q in Equation (3) increases. Since the amount of heat generation increases, control for decreasing the amount of heat generation is performed, and the current decreases.

The present invention is based on the above findings, and the gist of the present invention for solving the above problems are as follows.

[1] A resistance spot welding method for joining parts to be welded, in which a plurality of metal sheets is overlapped with each other, by squeezing and pressing the parts to be welded between a pair of electrodes and passing current. The resistance spot welding method includes

performing actual welding and test welding prior to the actual welding,
in the test welding, storing a time variation curve of an instantaneous amount of heat generation per unit volume and a cumulative amount of heat generation per unit volume calculated from an electrical property between the pair of electrodes when a target nugget diameter is formed by performing passing of current under constant current control,
in the actual welding, setting the time variation curve of the instantaneous amount of heat generation per unit volume and the cumulative amount of heat generation per unit volume stored when performing the passing of current in the test welding as target values of passing of current in the actual welding, and performing adaptive control welding in which a current-passing amount is controlled in accordance with the target values, wherein in the actual welding, a constant lower limit set value for a current is provided.

[2] The resistance spot welding method according to [1], wherein in the adaptive control welding, welding is performed using, as a standard, the time variation curve of the instantaneous amount of heat generation per unit volume and the cumulative amount of heat generation per unit volume set as the target values, and when a time variation amount of an instantaneous amount of heat generation per unit volume deviates from the time variation curve as the standard, the current-passing amount is controlled in a manner that a cumulative amount of heat generation per unit volume when performing the passing of current in the actual welding matches the cumulative amount of heat generation per unit volume set as the target value to compensate for an amount of deviation within a remaining current-passing time.

[3] The resistance spot welding method according to [1], wherein each of the passing of current in the test welding and the passing of current in the actual welding includes actual passing of current and preliminary passing of current prior to the actual passing of current, the time variation curve of the instantaneous amount of heat generation per unit volume and the cumulative amount of heat generation per unit volume stored when performing the actual passing of current in the test welding are set as target values of the actual passing of current in the actual welding, and the adaptive control welding in which the current-passing amount is controlled in accordance with the target values is performed as the actual passing of current in the actual welding.

[4] The resistance spot welding method according to [2], wherein each of the passing of current in the test welding and the passing of current in the actual welding includes actual passing of current and preliminary passing of current prior to the actual passing of current, the time variation curve of the instantaneous amount of heat generation per unit volume and the cumulative amount of heat generation per unit volume stored when performing the actual passing of current in the test welding are set as target values of the actual passing of current in the actual welding, and the adaptive control welding in which the current-passing amount is controlled in accordance with the target values is performed as the actual passing of current in the actual welding.

[5] The resistance spot welding method according to [1], wherein in the adaptive control welding, the lower limit set value for the current is set to 60% or more of a set current in the test welding.

[6] The resistance spot welding method according to [2], wherein in the adaptive control welding, the lower limit set value for the current is set to 60% or more of a set current in the test welding.

[7] The resistance spot welding method according to [3], wherein in the adaptive control welding, the lower limit set value for the current is set to 60% or more of a set current in the test welding.

[8] The resistance spot welding method according to [4], wherein in the adaptive control welding, the lower limit set value for the current is set to 60% or more of a set current in the test welding.

[9] The resistance spot welding method according to [5], wherein the parts to be welded in which the plurality of metal sheets is overlapped with each other has a gap between the metal sheets as a disturbance.

[10] The resistance spot welding method according to [6], wherein the parts to be welded in which the plurality of metal sheets is overlapped with each other has a gap between the metal sheets as a disturbance.

[11] The resistance spot welding method according to [7], wherein the parts to be welded in which the plurality of metal sheets is overlapped with each other has a gap between the metal sheets as a disturbance.

[12] The resistance spot welding method according to [8], wherein the parts to be welded in which the plurality of metal sheets is overlapped with each other has a gap between the metal sheets as a disturbance.

[13] A method for manufacturing a weld joint, the method including the spot welding method according to any one of [1] to [12].

Advantageous Effects of Invention

According to the present invention, providing the lower limit set value for the current value in the adaptive control welding makes it possible to achieve the resistance spot welding in which a required nugget diameter can be stably obtained even when a strong disturbance is present. Description of Embodiments

A resistance spot welding method and a method for manufacturing a weld joint according to the present invention will be described on the basis of the following embodiment.

According to an embodiment of the present invention, there is provided a resistance spot welding method for joining parts to be welded, in which a plurality of steel sheets is overlapped with each other, by squeezing and pressing the parts to be welded between a pair of electrodes and passing current. The method includes performing actual welding and test welding prior to the actual welding. In the test welding, a time variation curve of an instantaneous amount of heat generation per unit volume and a cumulative amount of heat generation per unit volume calculated from an electrical property between the electrodes when a target nugget diameter is formed by performing the passing of current under constant current control are stored. In the actual welding, the time variation curve of the instantaneous amount of heat generation per unit volume and the cumulative amount of heat generation per unit volume stored when performing the passing of current in the test welding are set as target values of the passing of current in the actual welding, and adaptive control welding in which a current-passing amount is controlled in accordance with the target values is performed. In the adaptive control welding, a constant lower limit set value for a current is provided. Note that metal sheets other than steel sheets may be used instead of steel sheets used as the parts to be welded.

Hereinafter, the contents of the resistance spot welding of the present invention will be described in the order.

A welding apparatus that can be used in the resistance spot welding method according to an embodiment of the present invention only needs to include a pair of upper and lower electrodes and be able to arbitrary control each of a pressing force and a welding current during welding. It is not particularly limited in terms of a pressing mechanism (air cylinder, servo motor, or the like), a type (stationary type, robot gun, or the like), an electrode shape, and the like. In addition, the electrical property between the electrodes means an inter-electrode resistance or an inter-electrode voltage.

Test Welding

The test welding is performed on parts to be welded for test welding under constant current control, and a time variation curve of an instantaneous amount of heat generation per unit volume and a cumulative amount of heat generation per unit volume calculated from the electrical property between the electrodes in the formation of a target nugget are stored. The welding apparatus used in the welding method of the present invention is provided with a storage device for storing the instantaneous amount of heat generation and the cumulative amount of heat generation. Note that a target nugget diameter is appropriately set according to a steel type, environment in which a weld joint is used, and the like, and is preferably $2\sqrt{t_1}$ or more, more preferably $3\sqrt{t_1}$ or more, and still more preferably $4\sqrt{t_1}$ or more. Here, $t_1$ is a sheet thickness (mm), and in a case of a pair of sheets having different sheet thicknesses from each other, $t_1$ is a sheet thickness of the sheet having a smaller thickness.

The passing of current in the test welding is performed by setting a current, a voltage, and a pressing force by which the target nugget diameter is obtained. Prior to such passing of current for obtaining the target nugget diameter (hereinafter referred to as "actual passing of current"), preliminary passing of current may be performed. The preliminary passing of current in the test welding preferably satisfies a relationship I1 < I2 in terms of a welding current I1 under the constant current control in the preliminary passing of current and a welding current I2 under the constant current control in the actual passing of current. Further, a current-passing pause time may be provided between the preliminary passing of current and the actual passing of current. Note that a welding time in the preliminary passing of current is not particularly limited, but is usually from 20 to 300 ms.

Actual Welding

After the above-described test welding, the actual welding is performed on the parts to be welded for the actual welding, which is the same pair of sheets as those for the test welding. When the preliminary passing of current and the actual passing of current are performed in the test welding, the preliminary passing of current and the actual passing of current are also performed in the actual welding. When the current-passing pause time is provided between the preliminary passing of current and the actual passing of current in the test welding, the current-passing pause time of the same time period as that in the test welding is also provided in the actual welding. In the actual welding, adaptive control welding based on, as a standard, the time variation curve of the instantaneous amount of heat generation per unit volume and the cumulative amount of heat generation stored as the target values in the test welding is performed. When a time variation amount of an instantaneous amount of heat generation per unit volume are conform to the time variation curve as the standard, the welding continues to be performed and then, the welding is finished.

On the other hand, when a time variation amount of an instantaneous amount of heat generation per unit volume deviates from the time variation curve as the standard in the preliminary passing of current or the actual passing of current, in order to compensate for an amount of the deviation within the remaining current-passing time of the preliminary passing of current or the actual passing of current, a current-passing amount is controlled such that a cumulative amount of heat generation per unit volume in the preliminary passing of current or the actual passing of current matches the cumulative amount of heat generation per unit volume obtained in advance in the preliminary passing of current or the actual passing of current in the test welding, respectively. That is, when an time variation amount of an instantaneous amount of heat generation per unit volume deviates from the time variation curve as the standard in the preliminary passing of current, in order to compensate for an amount of the deviation within the remaining current-passing time of the preliminary passing of current, a current-passing amount is controlled such that a cumulative amount of heat generation per unit volume in the preliminary passing of current matches the cumulative amount of heat generation per unit volume obtained in advance in the test welding. Further, when a time variation amount of an instantaneous amount of heat generation per unit volume deviates from the time variation curve as the standard in the actual passing of current, in order to compensate for an amount of the deviation within the remaining current-passing time of the actual passing of current, a current-passing amount is controlled such that a cumulative amount of heat generation per unit volume in the actual passing of current matches the cumulative amount of heat generation per unit volume obtained in advance in the actual passing of current in the test welding. In particular, it is preferable to perform the adaptive control welding for controlling the current-passing amount in the actual passing of current for actually forming a welded portion. On the other hand, at least when the preliminary passing of current is performed under a condition that the welded portion is not formed, it is not essential to control the current-passing amount.

Here, the present invention is characterized by a lower limit set value provided to the current value of the actual passing of current. The reason why the lower limit set value is set will be described in detail below by exemplifying a case where a gap exists between the sheets (hereinafter referred to as a "sheet gap") as a disturbance. Dimensional inaccuracy between components, sheet deformation due to existence of other welded portions, and the like cause the sheet gap to occur.

At the contact portion between the sheets when the sheet gap is large, the steel sheets are significantly warped along the shape of the electrodes by pressing, and the contact area between the sheets becomes small compared with a case where no sheet gap exists. Thus, the contact resistance between the sheets increases and the voltage between the electrodes rises. For this reason, it is recognized that the amount of heat generation has increased, and in the adaptive control welding, control for reducing the current-passing amount works, and as a result, the growth of the nugget is suppressed. For this problem, the present inventors have found that the reduction in the nugget diameter can be suppressed by providing a lower limit set value for the current such that the current-passing amount does not decrease excessively.

Here, in the actual welding of the present invention, even when the current value is less than the lower limit set value in the conventional adaptive control welding, the current value is fixed to the lower limit set value and the current is controlled so as not to further decrease. The lower limit set value for the current is set within a range equal to or less than a set current in the test welding.

To suppress the reduction in the nugget diameter, the lower limit set value for the current is preferably set to a value of 60% or more of the set current in the test welding. Typically, a value of 80% or more is preferable, and a value of 85% or more is more preferable. On the other hand, to secure the current control range required for the adaptive control, the lower limit set value for the current is preferably set to a value equal to or less than 96% of the set current in the test welding, and more preferably set to a value equal to or less than 95%.

In the present invention, even when the current value decreases beyond the lower limit set value in the conventional adaptive control welding, the current value is controlled to be fixed to the lower limit set value. For this reason, although a deviation from the target heat amount of the adaptive control welding occurs, the reduction in the nugget diameter can be suppressed.

Note that in the test welding, the constant current welding is performed on a pair of sheets in a state in which no disturbance exists, and the current value at which the target nugget diameter is obtained is set as the set current.

Although the above description has been made by exemplifying a sheet gap, the present invention does not necessarily need the presence of a disturbance and is applicable to a case where no disturbance exists. In addition to a case where the sheet gap exists, the present invention can be applied to cases of another disturbances, such as a case where one of the electrodes comes into contact with the metal sheet in advance, which is also referred to as clearance, a case where the centers of the upper and lower electrodes are displaced, which is also referred to as core displacement, a case where the electrodes are angled, which is also referred to as a striking angle, a case where a welded point exists nearby, which is also referred to as an existing welded point, a case where the electrode shape is changed due to continuous use, which is also referred to as electrode shape change, and the like.

The present invention is significantly effective when, among the disturbances, the disturbance is the sheet gap, in particular, when the sheet gap is large. This is because in a case where the sheet gap is large, the steel sheets are more largely warped when the steel sheets are pressed by the electrodes. This increases the contact resistance between the sheets, and as a result, the welding current is more significantly reduced in the conventional adaptive control welding, which causes a reduction in the nugget diameter. In particular, a large effect can be obtained when the sheet gap is equal to or larger than 1 mm.

Note that the method for calculating an amount of heat generation is not particularly limited, but an example thereof is disclosed in Patent Document 2, and this method can be employed in the present invention. A procedure for calculating an amount of heat generation q per unit volume and unit time and a cumulative amount of heat generation Q per unit volume by this method is as follows.

It is assumed that a total thickness of parts to be welded is defined as t, an electrical resistivity of the parts to be welded is defined as r, an inter-electrode voltage is defined as V, a welding current is defined as I, and a contact area between the electrode and the parts to be welded is defined as S. In this case, the welding current flows through a columnar portion having the cross-sectional area S and the thickness t to generate resistive heat. The amount of heat generation q per unit volume and unit time in this columnar portion is obtained by Equation (1) below.

$$q = (V \cdot I)/(S \cdot t) \qquad (1)$$

Further, an electrical resistance R of the columnar portion is obtained by Equation (2) below.

$$R = (r \cdot t)/S \qquad (2)$$

When Equation (2) is solved for S and the S is substituted into Equation (1), the amount of heat generation q is given by Equation (3) below.

$$q = (V \cdot I \cdot R)/(r \cdot t^2)$$
$$= (V^2)/(r \cdot t^2) \qquad (3)$$

As is clear from the above Equation (3), the amount of heat generation q per unit volume and unit time can be calculated from the inter-electrode voltage V, the total thickness t of the parts to be welded, and the electrical resistivity r of the parts to be welded, and is not affected by the contact area S between the electrode and the parts to be welded. Note that although in Equation (3), the amount of heat generation is calculated from the inter-electrode voltage V, the amount of heat generation q may be calculated from an inter-electrode current I. Also in this case, it is not necessary to use the contact area S between the electrode and the parts to be welded. Then, by accumulating the amount of heat generation q per unit volume and unit time over the current-passing period, the cumulative amount of heat generation Q per unit volume, which is generated during welding, is obtained. As is apparent from Equation (3), the cumulative amount of heat generation Q per unit volume can also be calculated without using the contact area S between the electrode and the parts to be welded.

Although the case where the cumulative amount of heat generation Q is calculated by the method described in Patent Document 2 has been described above, other equations for calculation may be used.

In addition, the conditions other than the welding current in the actual welding (the current-passing time and the set pressing force in the preliminary passing of current and the actual passing of current) may be the same as the conditions in the test welding.

Examples of the steel sheet in the present application also include a plated steel sheet, and both surfaces of the steel sheet may be plated. Further, in the resistance spot welding method according to the present invention, the parts to be welded is not particularly limited as long as the parts to be welded is a metal sheet having a resistance for generating heat. The resistance spot welding method according to the present invention can be applied to welding of not only steel sheets but also light metal sheets made of an aluminum alloy or the like. Furthermore, the resistance spot welding method according to the present invention can be applied to a set of sheets in which three or more metal sheets are stacked.

The embodiment of the present invention can also be applied to a case where, as in Patent Document 4, when the cumulative amount of heat generation is stored in the test welding, a state with a disturbance is simulated and stored, and then the current-passing amount is adaptively controlled such that the cumulative amount of heat generation in the actual welding matches the cumulative amount of heat generation in the state with the disturbance obtained in advance in the test welding.

Examples

Table 1 shows strength (MPa), a sheet thickness (mm), and a type of plating of the steel sheets used in each of sheet sets in examples. A sheet set of No. 1 was used for resistance spot welding by stacking a sheet 1 and a sheet 2, and a sheet set of No. 2 was used for resistance spot welding by stacking three sheets of a sheet 1, a sheet 2, and a sheet 3 in this order. Note that when no sheet type is described, it means that a metal sheet without plating was used, and when the sheet type is described as GA, it means that a metal sheet subjected to galvannealing on both surfaces thereof was used.

Test welding was performed on each of the sheet sets of the steel sheets shown in Table 1 under the conditions shown in Table 2, and a time variation curve of an instantaneous amount of heat generation and a cumulative amount of heat generation were stored as target values. Subsequently, in the actual welding stage, for each of cases where there was no sheet gap or cases where there were sheet gaps, the adaptive control welding was performed in the actual welding on the basis of the target values recorded in the test welding, thereby producing a weld joint. Note that also in the test welding and the actual welding, the preliminary passing of current was performed prior to the actual passing of current under the conditions shown in Table 2. The conditions of the preliminary passing of current were as follows: the pressing force was equal to that of the actual passing of current, the current value was 2 kA, and the current-passing time was 5 cycles. That is, also in the actual welding, the adaptive control welding was not performed in the preliminary passing of current. During the preliminary passing of current at the low current for the short time in this way, no melted portion is produced. Thus, it is not essential to perform the adaptive control welding in the preliminary passing of current. In addition, when a sheet gap existed, the actual welding was performed under conditions in which the sheet gap was from 0.5 mm to 2 mm. For each of the obtained weld joints, the welded portion was cut, the cross section was etched, and then observed with an optical microscope. From the difference between the obtained nugget diameter and the target nugget diameter, evaluation was performed as follows. Note that the target nugget diameter is an ideal nugget diameter when resistance spot welding is performed under the condition without a disturbance. The target nugget diameter can be appropriately set in accordance with a steel type, an environment in which the weld joint is used, and the like. However, in Examples of the present invention, the target nugget diameter was set to $2\sqrt{t_1}$ or more. $t_1$ is a sheet thickness (mm), and in a case of a sheet set having different sheet thicknesses, indicates a sheet thickness with a smaller thickness. Note that as described above, the target nugget diameter can be appropriately set in accordance with a steel type, an environment in which the weld joint is used, and the like, and thus is not limited to this value.

[Table 1]

| Sheet set No. | Sheet 1 | | | Sheet 2 | | | Sheet 3 | | |
|---|---|---|---|---|---|---|---|---|---|
| | TS (MPa) | Sheet thickness (mm) | Plating | TS (MPa) | Sheet thickness (mm) | Plating | TS (MPa) | Sheet thickness (mm) | Plating |
| 1 | 980 | 1.6 | GA | 980 | 1.6 | GA | | | |
| 2 | 2000 | 1.4 | | 2000 | 1.4 | TU | 980 | 1.2 | |

[Table 2]

| Condition No. | Sheet set No. | Test welding | | | Set disturbance | Disturbance intensity | Actual welding | | | | Notes |
|---|---|---|---|---|---|---|---|---|---|---|---|
| | | Pressing force (kN) | Current (kA) | Time (cycle) | | | Difference (kA) between lower limit value for current and set current | Ratio (%) of lower limit value for current to set current | Diameter change | Spatter | |
| 1 | 1 | 3 | 6.5 | 16 | No detection | No | No lower limit setting | No lower limit setting | ○ | No | Reference Example |
| 2 | 1 | 3 | 6.5 | 16 | Sheet gap | 0.5 mm | -1.0 | 85 | ○ | No | Examples of Invention |
| 3 | 1 | 3 | 6.5 | 16 | Sheet gap | 1 mm | -1.0 | 85 | ○ | No | Examples of Invention |
| 4 | 1 | 3 | 6.5 | 16 | Sheet gap | 2 mm | -0.3 | 95 | ○ | No | Examples of Invention |
| 5 | 1 | 3 | 6.5 | 16 | Sheet gap | 2 mm | No lower limit setting | No lower limit setting | × | No | Comparative Example |
| 6 | 1 | 3 | 6.5 | 16 | Striking angle | 3° | -1.0 | 85 | ○ | No | Examples of Invention |
| 7 | 1 | 3 | 6.5 | 16 | Striking angle | 5° | -0.6 | 91 | ○ | No | Examples of Invention |
| 8 | 1 | 3 | 6.5 | 16 | Striking angle | 10° | -0.3 | 95 | ○ | No | Examples of Invention |
| 9 | 1 | 3 | 6.5 | 16 | Striking angle | 10° | No lower limit setting | No lower limit setting | × | No | Comparative Example |
| 10 | 1 | 3 | 6.5 | 16 | Clearance | 0.5 mm | -1.0 | 85 | ○ | No | Examples of Invention |
| 11 | 1 | 3 | 6.5 | 16 | Clearance | 1 mm | -1.0 | 85 | ○ | No | Examples of Invention |
| 12 | 1 | 3 | 6.5 | 16 | Clearance | 2 mm | -0.3 | 95 | ○ | No | Examples of Invention |
| 13 | 1 | 3 | 6.5 | 16 | Clearance | 2 mm | No lower limit setting | No lower limit setting | × | No | Comparative Example |

| Condition No. | Sheet set No. | Pressing force (kN) | Test welding | | | | Actual welding | | | | | Notes |
|---|---|---|---|---|---|---|---|---|---|---|---|---|
| | | | Current (kA) | Time (cycle) | Set disturbance | Disturbance intensity | Difference (kA) between lower limit value for current and set current | Ratio (%) of lower limit value for current to set current | Diameter change | Spatter | | |
| 14 | 2 | 4.5 | 7.5 | 21 | No detection | No | No lower limit setting | No lower limit setting | ○ | No | | Reference Example |
| 15 | 2 | 4.5 | 7.5 | 21 | Sheet gap | 0.5 mm | -1.0 | 87 | ○ | No | | Examples of Invention |
| 16 | 2 | 4.5 | 7.5 | 21 | Sheet gap | 1 mm | -1.0 | 87 | ○ | No | | Examples of Invention |
| 17 | 2 | 4.5 | 7.5 | 21 | Sheet gap | 2 mm | -0.3 | 96 | ○ | No | | Examples of Invention |
| 18 | 2 | 4.5 | 7.5 | 21 | Sheet gap | 2 mm | No lower limit setting | No lower limit setting | × | No | | Comparative Example |
| 19 | 2 | 4.5 | 7.5 | 21 | Sheet gap | 2 mm | -3.0 | 60 | ○ | No | | Examples of Invention |
| 20 | 2 | 4.5 | 7.5 | 21 | Sheet gap | 2 mm | -3.2 | 58 | △ | No | | Examples of Invention |
| 21 | 2 | 4.5 | 7.5 | 21 | Sheet gap | 2 mm | -3.8 | 50 | △ | No | | Examples of Invention |

EP 4 613 415 A1

The difference between the lower limit value for current and the set current in Table 2 is the difference between the lower limit value for current set in the adaptive control performed in the actual welding and the set current in the test welding. The ratio of the lower limit value for current to the set current is the ratio of the lower limit value for current set in the adaptive control performed in the actual welding to the set current in the test welding. The diameter change in Table 2 is set as follows; the case where the absolute value of the difference between the target nugget diameter as described above and the nugget diameter obtained by the actual welding was smaller than $0.45 \times$ the square root of a sheet thickness was determined to be ○ (Excellent), the case where the absolute value of the difference was $0.45 \times$ the square root of the sheet thickness or more and smaller than $0.5 \times$ the square root of the sheet thickness was determined to be △ (Pass), and the case where the absolute value of the difference was $0.5 \times$ the square root of the sheet thickness or more was determined to be $\times$ (Fail).

○ (Excellent): The absolute value of the difference between the target nugget diameter and the nugget diameter obtained by the actual welding is less than $0.45 \times$ the square root of the sheet thickness.
△ (Pass): The absolute value of the difference between the target nugget diameter and the nugget diameter obtained by the actual welding is $0.45 \times$ the square root of the sheet thickness or more and less than $0.50 \times$ the square root of the sheet thickness.
$\times$ (Fail): The absolute value of the difference between the target nugget diameter and the nugget diameter in a case where there is disturbance is $0.50 \times$ the square root of the sheet thickness or more.

Note that in Table 2, time is represented by the number of cycles of a welding current. That is, when the frequency of a welding current is 50 Hz, one cycle corresponds to 20 ms. For example, 16 cycles in the condition of No.1 (Reference Example) in Table 2 means 320 ms. In the examples, one cycle corresponds to 20 ms.

In Examples of the present invention, even when disturbances were detected, when the lower limit set values for the current were provided, the diameter changes were determined to be Excellent or Pass. On the other hand, in Comparative Examples in which the lower limit set value for the current was not provided, the diameter changes were determined to be Fail. It is considered that these results were obtained because a state in which heat generation and melting of the nugget portion ideally proceeded and a desired nugget diameter could be obtained could be maintained by providing the lower limit set value for the current and reducing an excessive decrease in current. In the examples shown in Table 2, even when various disturbances were intentionally set and the disturbance was detected, in Examples of the present invention, the lower limit set value for the current was set and the actual welding was performed, thereby obtaining excellent results. In an actual production site, a disturbance may occur unintentionally due to various factors. Thus, to obtain a welding method suitable for use in such an actual production site, the lower limit set value for the current is set on the premise that a disturbance may occur, as a precautionary approach for avoiding an undesirable result even when a disturbance occurs, without being conditioned on detection of the disturbance.

**Claims**

1. A resistance spot welding method for joining parts to be welded, in which a plurality of metal sheets is overlapped with each other, by squeezing and pressing the parts to be welded between a pair of electrodes and passing current, the resistance spot welding method comprising:

   performing actual welding and test welding prior to the actual welding;
   in the test welding, storing a time variation curve of an instantaneous amount of heat generation per unit volume and a cumulative amount of heat generation per unit volume calculated from an electrical property between the pair of electrodes when a target nugget diameter is formed by performing passing of current under constant current control; and
   in the actual welding, setting the time variation curve of the instantaneous amount of heat generation per unit volume and the cumulative amount of heat generation per unit volume stored when performing the passing of current in the test welding as target values of passing of current in the actual welding, and performing adaptive control welding in which a current-passing amount is controlled in accordance with the target values,
   wherein in the actual welding, a constant lower limit set value for a current is provided.

2. The resistance spot welding method according to claim 1, wherein
   in the adaptive control welding, welding is performed using, as a standard, the time variation curve of the instantaneous amount of heat generation per unit volume and the cumulative amount of heat generation per unit volume set as the target values, and when a time variation amount of an instantaneous amount of heat generation per unit volume deviates from the time variation curve as the standard, the current-passing amount is controlled in a manner that a cumulative amount of heat generation per unit volume in the passing of current of the actual welding matches the cumulative amount of heat generation per unit volume set as the target value to compensate for an amount of deviation within a remaining current-passing time.

3. The resistance spot welding method according to claim 1, wherein
each of the passing of current in the test welding and the passing of current in the actual welding includes actual passing of current and preliminary passing of current prior to the actual passing of current, the time variation curve of the instantaneous amount of heat generation per unit volume and the cumulative amount of heat generation per unit volume stored when performing the actual passing of current in the test welding are set as target values of the actual passing of current in the actual welding, and the adaptive control welding in which the current-passing amount is controlled in accordance with the target values is performed as the actual passing of current in the actual welding.

4. The resistance spot welding method according to claim 2, wherein
each of the passing of current in the test welding and the passing of current in the actual welding includes actual passing of current and preliminary passing of current prior to the actual passing of current, the time variation curve of the instantaneous amount of heat generation per unit volume and the cumulative amount of heat generation per unit volume stored when performing the actual passing of current in the test welding are set as target values of the actual passing of current in the actual welding, and the adaptive control welding in which the current-passing amount is controlled in accordance with the target values is performed as the actual passing of current in the actual welding.

5. The resistance spot welding method according to claim 1, wherein
in the adaptive control welding, the lower limit set value for the current is set to 60% or more of a set current in the test welding.

6. The resistance spot welding method according to claim 2, wherein
in the adaptive control welding, the lower limit set value for the current is set to 60% or more of a set current in the test welding.

7. The resistance spot welding method according to claim 3, wherein
in the adaptive control welding, the lower limit set value for the current is set to 60% or more of a set current in the test welding.

8. The resistance spot welding method according to claim 4, wherein
in the adaptive control welding, the lower limit set value for the current is set to 60% or more of a set current in the test welding.

9. The resistance spot welding method according to claim 5, wherein
the parts to be welded in which the plurality of metal sheets is overlapped with each other has a gap between the metal sheets as a disturbance.

10. The resistance spot welding method according to claim 6, wherein
the parts to be welded in which the plurality of metal sheets is overlapped with each other has a gap between the metal sheets as a disturbance.

11. The resistance spot welding method according to claim 7, wherein
the parts to be welded in which the plurality of metal sheets is overlapped with each other has a gap between the metal sheets as a disturbance.

12. The resistance spot welding method according to claim 8, wherein
the parts to be welded in which the plurality of metal sheets is overlapped with each other has a gap between the metal sheets as a disturbance.

13. A method for manufacturing a weld joint, the method comprising the spot welding method according to any one of claims 1 to 12.

## INTERNATIONAL SEARCH REPORT

| International application No. |
| --- |
| **PCT/JP2024/001491** |

**A.    CLASSIFICATION OF SUBJECT MATTER**

*B23K 11/24*(2006.01)i; *B23K 11/11*(2006.01)i
FI:    B23K11/24 315; B23K11/11 540

According to International Patent Classification (IPC) or to both national classification and IPC

**B.    FIELDS SEARCHED**

Minimum documentation searched (classification system followed by classification symbols)

B23K11/24; B23K11/11

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2020/004115 A1 (JFE STEEL CORPORATION) 02 January 2020 (2020-01-02) paragraphs [0025]-[0030], [0036], [0039], fig. 1-2 | 1-2, 5-6, 9-10, 13 |
| Y | | 3-4, 7-8, 11-12 |
| Y | WO 2019/035367 A1 (JFE STEEL CORPORATION) 21 February 2019 (2019-02-21) paragraph [0035] | 3-4, 7-8, 11-12 |
| A | | 1-2, 5-6, 9-10, 13 |
| A | WO 2015/049998 A1 (JFE STEEL CORPORATION) 09 April 2015 (2015-04-09) entire text, all drawings | 1-13 |
| A | WO 2020/095847 A1 (JFE STEEL CORPORATION) 14 May 2020 (2020-05-14) entire text, all drawings | 1-13 |
| A | JP 2005-279678 A (JFE STEEL CORPORATION) 13 October 2005 (2005-10-13) entire text, all drawings | 1-13 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 February 2024** | **12 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/001491**

| Patent document cited in search report | | | Publication date (day/month/year) | Patent family member(s) | | | Publication date (day/month/year) |
|---|---|---|---|---|---|---|---|
| WO | 2020/004115 | A1 | 02 January 2020 | US paragraphs [0043]-[0067], [0083]-[0086], [0093]-[0097], fig. 1-2 | 2021/0260684 | A1 | |
| WO | 2019/035367 | A1 | 21 February 2019 | US paragraph [0067] CN | 2021/0023646 110997210 | A1 A | |
| WO | 2015/049998 | A1 | 09 April 2015 | US entire text, all drawings CN | 2016/0236294 105612020 | A1 A | |
| WO | 2020/095847 | A1 | 14 May 2020 | (Family: none) | | | |
| JP | 2005-279678 | A | 13 October 2005 | (Family: none) | | | |

Form PCT/ISA/210 (patent family annex) (July 2022)

**REFERENCES CITED IN THE DESCRIPTION**

**Patent documents cited in the description**

- JP H1094883 A
- JP H1133743 A
- WO 2015049998 A
- JP 2019034341 A
- WO 2020095847 A